# EUROPEAN PATENT APPLICATION

(11) **EP 1 901 517 A1**
(43) Date of publication of application: **19.03.2008**
(21) Application number: 06019494.1
(22) Date of filing: 18.09.2006
(51) Int. Cl.: H04L 29/06

(54) **Method and apparatus for providing interworking between Voice-over-IP networks**

(71) Applicant: Nokia Siemens Networks GmbH & Co. KG, 81541 München (DE)
(72) Inventor: Gellas, Georgios, 13671 Athen (GR)

(57) **Abstract**

The present invention relates to a method and apparatus for providing interworking between Voice-over-IP networks. More particularly, the present invention relates to a method and apparatus for bridging a H.323 network and a SIP network by converting received H.323 registration requests to SIP registration messages and converting received SIP registration acknowledgements to H.323 registration acknowledgements, wherein an indication is provided in the H.323 registration acknowledgements instructing a receiver (100) of the H.323 registration acknowledgements to route all subsequent signaling through a gatekeeper (100). Subsequently, any received H.225 setup message is converted to a SIP invite message, wherein information from a "calling party number" parameter of the H.225 message is inserted in a "from" header of the SIP message and information from a "display" parameter of the H.225 message is inserted in a "p-asserted-identity" header of the SIP message.

## Description

The present invention relates to a method and apparatus for providing interworking between Voice-over-IP networks. More particularly, the present invention relates to a method and apparatus for bridging a H.323 network and a SIP network.

In modern telecommunications networks, voice-over-packet transport techniques, particularly voice-over-internet protocol (VoIP) techniques, are replacing the TDM switching technology of the past that relied on expensive dedicated circuits. The two most commonly used VoIP techniques are known as the ITU-T H.323 family of protocols and the IETF RFC 3261 session initiation protocol (SIP).

SIP currently is the core network operators' preferred choice, while H.323 (for which standardization began much earlier) is often used in private branch exchanges (PBX). Thus, in order to attach a H.323 PBX to a modern core network, a protocol conversion is required.

SIPconnect is a standards-based approach to direct IP peering of SIP-enabled PBXs and SIP-based VoIP service provider networks. "Direct IP peering" refers to directly coupling the PBX to the core network on IP level, i.e., without converting VoIP to TDM and back to VoIP. The SIPconnect Interface Specification is an important industry initiative that builds on existing IETF standards to define a method for providing interworking between SIP PBXs and SIP based VoIP service provider networks, and specifies a reference architecture, required protocols and features, and implementation rules necessary for seamless IP peering between SIP PBXs and SIP VoIP service providers. However, SIPconnect does not consider attaching a H.323 PBX to a SIP core network.

Thus, it is an objective of the present invention to provide a method and apparatus for bridging and/or providing an interworking between H.323 and SIP VoIP networks.

In accordance with the foregoing objectives there is provided by the invention a method for providing interworking between a H.323 network and a SIP network, comprising:
- converting any received H.323 registration request to a SIP registration message;
- converting any received SIP registration acknowledgement to a H.323 registration acknowledgement, wherein an indication is provided in the H.323 registration acknowledgement instructing a receiver of the H.323 registration acknowledgement to route all subsequent signaling through a gatekeeper;
- converting any received H.225 setup message to a SIP invite message, wherein information from a "calling party number" parameter of the H.225 message is inserted in a "from" header of the SIP message and information from a "display" parameter of the H.225 message is inserted in a "p-asserted-identity" header of the SIP message.

In accordance with the invention there is also provided a network element, preferably a session border controller, for performing the inventive method.

The dependent claims define preferred embodiments of the present invention.

Using the present invention, H.323 PBXs may advantageously be coupled to SIP service provider networks. For this, it is of particular advantage that the signaling switches in the service providers' SIP networks need not be modified.

Preferred embodiments of the present invention will now be described with reference to a drawing.

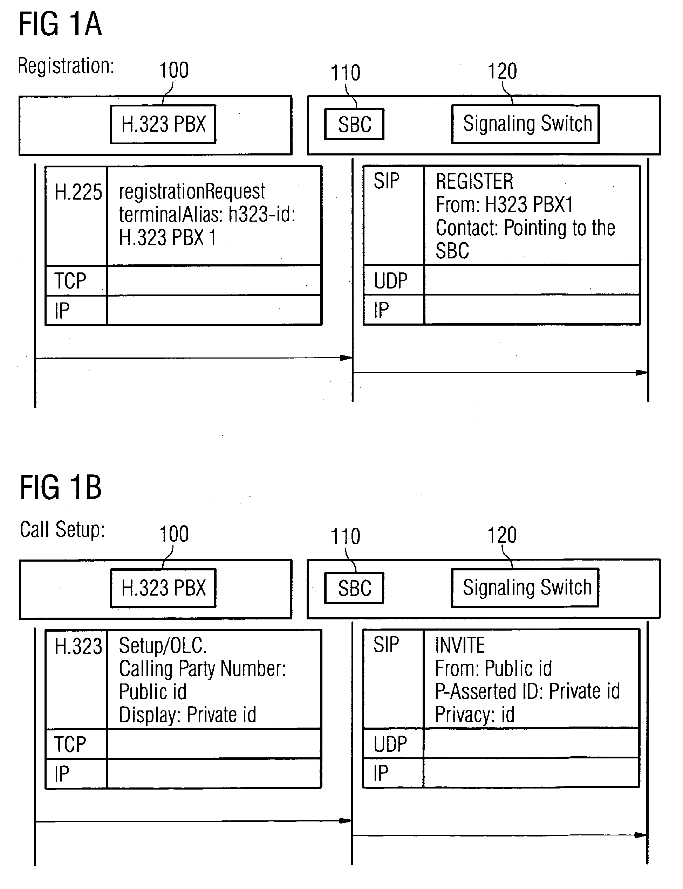

In the figure, there is schematically shown a H.323 PBX 100 connected by means of a session border controller (SBC) 110 to a SIP signaling switch 120. The two part figure shows the process of registering the PBX 100 at the switch 120 which is part of a service provider's network (not shown), and the process of setting up a call from PBX 100 to a called party (not shown) reachable through the service provider's network.

Both processes will now be described in detail.

### Registration

A network element is chosen to act as an interworking unit between H.323 and SIP and/or SIPconnect, in the preferred embodiment SBC 110. SBC 110 registers PBX 100 to switch 120. In order to most efficiently provide the interworking, SBC 110 may play the role of the gatekeeper/registrar for the H.323 PBX. As will be readily apparent to those with skills in the art, multiple physical entities may be provided for the session border control function, the gatekeeper function, and the registrar function.

Registration Requests (RRQ) from PBX 100, or more precisely, a gateway function in or at PBX 100, will be sent to the PBX's assigned gatekeeper, which in the preferred embodiment is SBC 110. In the majority of the installed H.323 based PBXs, the PBX gateway sends a single registration to the relevant gatekeeper which does not include any information related to the internal lines of the PBX. Providing information about the internal lines of PBX 100 is a task of the PBX's H.323 gateway, so that the gatekeeper has no information about those internal lines.

The interworking unit 110 forwards this RRQ from PBX 100 in the form of a SIP "REGISTER" to the service provider's SIP signaling switch 120. Upon receiving a SIP "2000K" from SIP signaling switch 120, the SBC 110 affirmatively responds to the RRQ from the H.323 PBX. SBC 110 provides this response with an indication, for example a flag, which instructs PBX 100 to route all subsequent signaling messages through the gatekeeper specified in this indication, i.e., the SBC in the

### preferred embodiment.

The SIP "REGISTER" message may be built from the corresponding H.323 RRQ message as follows: the H.323-id is mapped to an "address of record" (AoR), and a "contact" header pointing to SBC 110 is created and provided to SIP signaling switch 120. SBC 110 sends a single "REGISTER" message for PBX 100.

Also, SBC 110 preferentially stores the following information for routing messages between the H.323 and the SIP domains:

| **SBC mappings** | |
|---|---|
| ***H.323 domain*** | ***SIP domain*** |
| H.323-id | Address of Record |
| Gateway IP | Contact info |
| E.164 number (if available) | - |

The SIP REGISTER request from SBC 110 to switch 120 - when successfully accepted by a service provider's SIP application server 120, or switch, - registers a so-called "parent ID" and, where available, any relevant so-called "child ID". SBC 110 may cache either only the "parent ID" or, if the SIP application server 120 returns in the "2000K" to the "REGISTER" request the "child IDs" as "p-associated URIs", then the SBC preferably also caches the "child IDs".

### Call Setup

Call setup requests from PBX 100 will be sent to SBC 110 acting as gatekeeper in the preferred embodiment, as instructed by the indication explained above. SBC 110 receives these requests and may convert them in accordance with the rules provided below.

For the signaling switch 120 which for the purposes of this description may also be referred to as a SIP application server, the H.323 PBX 100 is invisible, and SBC 110 presents itself as a SIP capable, or SIPconnect capable, SIP PBX.

In order to interface correctly with switch 120, SBC 110 needs to provide the following information:
- a valid "From:" field with the URI that is associated with the desired public PSTN identity of PBX 100 or an anonymous URI;
- a SIP "Privacy:" header field that requests "id" privacy as defined in RFC 3325;
- a "P-Asserted-Identity:" SIP header field specifying the caller's identity, for example the PBX caller's telephone number in ITU-T E.164 format, an enterprise domain name and (optional) desired display name information.

The information required to populate these fields/headers appropriately is extracted from a H.225 setup signaling message as follows: the "Calling Party Number:" parameter of the H.225 "Setup:" message is used to build the SIP "From:" header of the SIP "INVITE" message, and the "Display:" parameter of the H.225 "Setup:" message is used to build the SIP "P-Asserted-Identity:" header of the SIP "INVITE" message.

This conversion rule may be applied to both H.323 fast and slow start. In the slow start case SBC 110 may use the same rule to build a SIP "ReINVITE" message including the necessary SDP information based on the OLC messages of the H.323 section.

In order to facilitate the inventive method, it may be necessary to modify a given H.323 based PBX 100 to provide the desired public identity in the "Calling Party Number:" parameter and the desired private identity in the "Display:" parameter.

Advantageously, the service providers' signaling switches 120, particularly those already supporting the SIPconnect interface specification, need not be modified.

In the following tables, a more detailed mapping list for parameters is specified which may additionally be mapped by SBC 110. Note that these mappings are optional with the exception of the H.225 parameters "Calling Party Number" and "Display" as specified above.

| **H.225 "Setup" information element** | **SIP "INVITE"** |
|---|---|
| Protocol discriminator | |
| Call reference | |
| Sending complete | |
| Repeat indicador | |
| Bearer capability | SDP |
| Extended facility | |
| Channel identification | |
| Facility | |
| Progress indicator | |
| Network specific facilities | |
| Notification indicator | |
| Display | P-Asserted-Id |
| Keypad facility | |
| Signal | |
| Calling party number | FROM |
| Calling party subaddress | |
| Called party number | Request-URI and/or TO header |
| Called party subaddress | |
| Redirecting Number | Diversion header |
| Transit network selection | |
| Repeat indicator | |
| Low layer compatibility | |
| High layer compatibility | |
| User-to-User | |

| **User-to-user IE** | **SIP** |
|---|---|
| ProtocolIdentifier | |
| h245Address | |
| SourceAddress | VIA header |
| SourceInfo | |
| DestinationAddress | Request-Uri / TO header |
| DestCallSignalAddress | |
| DestExtraCallInfo | |
| DestExtraCRV | |
| ActiveMC | |
| ConferenceID | |
| ConferenceGoal | |
| CallServices | |
| CallType | |
| SourceCallSignalAddress | |
| RemoteExtensionAddress | |
| CallIdentifier | Call-Id |
| h245SecurityCapability | |
| Tokens | |
| CryptoTokens | |
| FastStart | SDP |
| MediaWaitForConnect | |
| CanOverlapSend | |
| EndpointIdentifier | |
| MultipleCalls | |
| MaintainConnection | |
| ConnectionParameters | |
| Language | |
| PresentationIndicator | Controlled by Privacy headers |
| ScreeningIndicator | Controlled by Privacy headers |
| serviceControl | |
| symmetricOperationRequired | |
| Capacity | |
| CircuitInfo | |
| desiredProtocols | |
| neededFeatures | |
| desiredFeatures | |
| SupportedFeatures | |
| parallelH245Control | |
| AdditionalSourceAddresses | |

Possible variations and/or additions can be made by those skilled in the art to the embodiments here described and illustrated without departing from the scope of the present invention as defined in the appended claims.

## Claims

1. A method for providing interworking between a H.323 network and a SIP network, comprising:
- converting any received H.323 registration request to a SIP registration message;
- converting any received SIP registration acknowledgement to a H.323 registration acknowledgement, wherein an indication is provided in the H.323 registration acknowledgement instructing a receiver (100) of the H.323 registration acknowledgement to route all subsequent signaling through a gatekeeper;
- converting any received H.225 setup message to a SIP invite message, wherein information from a "calling party number" parameter of the H.225 message is inserted in a "from" header of the SIP message and information from a "display" parameter of the H.225 message is inserted in a "p-asserted-identity" header of the SIP message.

2. The method of claim 1, wherein a network element (110) performing the interworking steps comprises the gatekeeper.

3. The method of any of claims 1 or 2, wherein the step of converting the H.323 registration request to a SIP registration request further comprises mapping a H.323 "id" to a SIP "address of record" and providing an address of a network element performing the interworking steps as SIP "contact info" to a receiver (120) of the SIP registration message.

4. The method of claim 3, further comprising a storing of the mapping relationship.

5. The method of any of claims 2 through 4, wherein the network element (110) performing the interworking steps is a session border controller.

6. A network element (110) for providing interworking between a H.323 network and a SIP network, comprising:
- means for receiving H.323 registration requests;
- means for converting any received H.323 registration request to a SIP registration message;
- means for sending the SIP registration message;
- means for receiving SIP registration acknowledgements;
- means for converting any received SIP registration acknowledgement to a H.323 registration acknowledgement, wherein an indication is provided in the H.323 registration acknowledgement instructing a receiver (100) of the H.323 registration acknowledgement to route all subsequent signaling through a gatekeeper;
- means for sending the H.323 registration acknowledgement;
- means for receiving H.225 signaling messages;
- means for converting any received H.225 setup message to a SIP invite message, wherein information from a "calling party number" parameter of the H.225 message is inserted in a "from" header of the SIP message and information from a "display" parameter of the H.225 message is inserted in a "p-asserted-identity" header of the SIP message; and
- means for sending the SIP invite message.

7. The network element (110) of claim 6, further comprising the gatekeeper.

8. The network element (110) of any of claims 6 or 7, wherein the means for converting the H.323 registration request to a SIP registration request further comprises a means for mapping a H.323 "id" to a SIP "address of record" and for providing an address of the network element as SIP "contact info" to a receiver (120) of the SIP registration message.

9. The network element (110) of claim 8, further comprising a storing means for storing the mapping relationship.

10. The network element (110) of any of claims 7 through 9, wherein the network element (110) is a session border controller.
